# EUROPÄISCHE PATENTANMELDUNG

(11) **EP 2 090 551 A1**
(43) Veröffentlichungstag der Anmeldung: **19.08.2009**
(21) Anmeldenummer: 08022086.6
(22) Anmeldetag: 19.12.2008
(51) Int. Cl.: C03C 17/00, C11D 3/00, C11D 11/00, C09D 5/00

(54) **Anti-Kratz-Beschichtung, Verfahren zu deren Herstellung und deren Verwendung**

(30) Priorität: 12.02.2008 DE 102008008593
(71) Anmelder: Schott AG, 55122 Mainz (DE)
(72) Erfinder: Steden, Folker, Dr., 01187 Dresden (DE); Fechner, Jörg Hinrich, Dr., 55118 Mainz (DE)
(74) Vertreter: Sawodny, Michael-Wolfgang

(57) **Zusammenfassung**

Die Erfindung betrifft eine Anti-Kratz-Beschichtung auf einem Substrat, umfassend ein oder mehrere Anti-Kratz-Mittel und ein pH-Puffer-System, das in wässeriger Lösung einen pH-Wert im Bereich von neutral bis stark alkalisch, insbesondere einen pH-Wert im Bereich von etwa 7 bis etwa 12, bevorzugt einem pH-Wert im Bereich von neutral bis schwach alkalisch, insbesondere einen pH-Wert im Bereich von etwa 7 bis etwa 9 aufweist. Gegenstand der Erfindung ist auch die Herstellung und Verwendung der Anti-Kratz-Beschichtung.

## Beschreibung

Die Erfindung betrifft eine Anti-Kratz-Beschichtung, insbesondere für Halbzeug, ein Verfahren zu deren Herstellung und deren Verwendung.

### Hintergrund der Erfindung

In bekannter Weise werden für Gasentladungslampen, wie beispielsweise CCFL-(cold-cathode fluorescent lamp) oder auch EEFL-(external electrode fluorescent lamp)-Gasentladungslampen alkalihaltige Silikatgläser, insbesondere Borosilikatgläser, verwendet. Die Hauptkomponenten derartiger Gläser sind SiO₂, B₂O₃ sowie Alkali- und Erdalkalioxide. Durch die relativ hohen Gehalte an B₂O₃ in der Glasmatrix von beispielsweise 10 bis 20 Gew.% besitzen diese Gläser eine relativ schlechte chemische Beständigkeit gegenüber Säuren und Laugen als auch eine geringe hydrolytische Beständigkeit.

Weiterhin bekannt ist es, die Glasrohre vor dem eigentlichen Herstellungsverfahren der Lampen zur Säuberung einem Waschprozess zu unterziehen. Dieser Waschprozess dient einerseits dazu, Verunreinigungen, die sich z.B. während des Transports auf der Außen- bzw. Innenseite abgelagert haben, zu entfernen; andererseits zum Entfernen eventuell vorhandener Glassplitter. Das Waschen erfolgt hierbei mit Wasser und gegebenenfalls reinigenden Zusätzen.

Dieses üblicherweise durchgeführte Waschverfahren bringt eine Reihe an Nachteilen mit sich: So kann es aufgrund der schlechten chemischen Beständigkeit der Gläser während des Waschverfahrens zu einer Reaktion der Glasoberfläche mit der Waschlösung kommen, wie z.B. einer Auslaugung. Dies kann eine Auflösung des Glases bedeuten, d.h. das Glas wird an- bzw. komplett aufgelöst und Komponenten des Glases gehen in Lösung. Unter normalen Bedingungen, wie Raumtemperatur und einem neutralen pH-Wert, kommt es zwar nur zu einem teilweisen Anlösen des Glases, jedoch werden hierdurch sowohl die Form als auch die Eigenschaften des Glases verändert. Weiterhin kann ein lonenaustausch an der Glasoberfläche stattfinden, bei dem z.B. Alkali-lonen aus dem Glas in Lösung gehen und gegen Protonen (H⁺) ausgetauscht werden können. Auch kann B₂O₃ aus der Glasmatrix herausgelöst werden.

Diese Reaktionen der Waschlösung mit dem Glas zeigen ihre negativen Auswirkungen insbesondere erst bei der Weiterverarbeitung der Gläser: Bei nachfolgenden Temperaturbehandlungen, beispielsweise einem nachfolgenden Temperschritt, z.B. dem sog. "Bakingprozess" (bei Maximaltemperaturen im Bereich von beispielsweise etwa 500°C bis etwa 750°C, typischerweise 600°C bis 700°C), bei dem die Fluoreszenzschicht auf der Innenseite des Rohres eingebrannt wird, kommt es zu einem Schrumpf des Rohres ("Shrinkage" bzw. "Compaction"). Unter einer "Compaction" wird im Rahmen der vorliegenden Erfindung eine irreversible lokale Verdichtung verstanden, die einer Kontraktion des Materials auf molekularer Ebene entspricht. Durch das Herauslösen von Komponenten, wie Alkali-lonen oder B₂O₃, aus der Glasmatrix wird das Netzwerk quasi "grobmaschiger", so dass sich das Netzwerk beim Erhitzen des Rohres zusammenzieht.

Somit kann dies zu einer Formdeformation, insbesondere einer Verkürzung der Rohrlänge kommen. Diese Verkürzung des Rohrs kann in einer Größenordnung von etwa 0,5% bis 10% oder mehr liegen. Dies bedeutet im schlimmsten Fall, dass die Rohre aufgrund ihrer Verkürzung, für den beabsichtigten Verwendungszweck unbrauchbar sind, und als Ausschuss ausgesondert werden müssen.

Derartige nachteilige Effekte wie bei Glas werden auch bei anderen Materialien erwartet.

Überraschenderweise wurde nun von den Erfindern gefunden, dass sich dieser unerwünschte Schrumpfungs-Effekt deutlich reduzieren bzw. ganz verhindern lässt, indem das Waschverfahren unter genau definierten Bedingungen durchgeführt wird insbesondere bei einem pH-Wert im neutralen bis schwach alkalischen Bereich, d.h. von 7 bis 9, besonders bevorzugt im Bereich von 7 bis 8. Von einem Nachverarbeiter kann daher eine Waschlösung mit eingestelltem pH-Wert direkt als Fertigprodukt eingesetzt werden, oder es kann eine Waschlösung verwendet werden, in welcher der pH-Wert im genannten Bereich, beispielsweise durch Zugabe eines pH-Puffersystems, nachträglich eingestellt wird, um die beschriebenen nachteiligen Effekte auszuschließen. Das Waschen hat jedoch den großen Nachteil, dass der Hersteller des Substrats, wie beispielsweise ein Glashersteller, keinen Einfluss auf die ordnungsgemäße und optimale Einstellung des pH-Wertes der Waschlösung hat und auf diesen Produktionsschritt hinsichtlich Qualitätssicherung keine Möglichkeit der Kontrolle ausüben kann. Unsachgemäße Durchführung des Waschverfahrens beim Nachverarbeiter kann aber zu Materialmängeln führen, die dem Hersteller als Mängel am Material angelastet werden können.

Der vorliegenden Erfindung liegt demnach die Aufgabe zugrunde, die oben geschilderten Nachteile des Standes der Technik zu vermeiden und eine Möglichkeit bereitzustellen, mit der eine Reaktion eines Waschmediums bei einem Waschverfahren mit einer Materialoberfläche auf ein Mindestmaß herab gesenkt wird oder eine derartige Reaktion in definierter Art und Weise zu kontrollieren, beispielsweise ein Schrumpfen ("Shrinkage") in Form einer Verkürzung des Materials bei einer nachfolgenden Temperaturbehandlung in kontrollierter Weise ablaufen zu lassen, so dass gemittelt über eine große Anzahl von Chargen eine möglichst gleichförmige Änderung erzielbar ist. Hierbei soll die Kontrolle des Waschverfahrens derart sein, dass diese auch noch bei einem Nachverwender kontrolliert durchgeführt werden kann. Weiterhin sollte das Waschverfahren seinen ursprünglichen Zweck der Reinigung der Materialoberfläche in befriedigender Weise erfüllen.

### Beschreibung der Erfindung

Erfindungsgemäß wird die Aufgabe der vorliegenden Erfindung durch eine Anti-Kratz-Beschichtung auf einem Substrat gelöst, umfassend ein oder mehrere Anti-Kratz-Mittel und
ein pH-Puffer-System, das in wässeriger Lösung einen pH-Wert im Bereich von neutral bis stark alkalisch, insbesondere einen pH-Wert im Bereich von etwa 7 bis etwa 12, bevorzugt einen pH-Wert im Bereich von neutral bis schwach alkalisch, insbesondere einen pH-Wert im Bereich von etwa 7 bis etwa 9 aufweist.

Die vorliegende Erfindung basiert auf der überraschenden Erkenntnis, dass sich der unerwünschte Effekt der Schrumpfung ("Shrinkage") auf ein Mindestmaß herabsenken, sich ganz unterdrücken oder gezielt einstellen lässt, wenn ein Waschverfahren unter definierten Bedingungen, insbesondere in einem neutralen bis stark alkalischen Bereich, bevorzugt neutralen bis schwach alkalischen Bereich durchgeführt wird, wobei sich die pH-Wert-Einstellung im Waschverfahren in einfacher Weise durch die Zusammensetzung der erfindungsgemäßen Anti-Kratz-Beschichtung kontrollieren lässt. Im Waschverfahren sollte der pH-Wert der Waschlösung im Bereich von 7 bis 12, bevorzugter im Bereich von 7 bis 9, besonders bevorzugt im Bereich von 7 bis 8. Neben einem schwach alkalischen Bereich hat sich zusätzlich eine Erweiterung auf stark alkalische Bereiche als vorteilhaft erwiesen. Es hat sich als besonders vorteilhaft erwiesen, wenn ein pH-Wert in diesem pH-Bereich eingestellt wird, da hierdurch die Oberfläche eines Substrats, beispielsweise eines Glases, nicht oder nur in sehr geringem Maße von der Waschlösung angegriffen wird. Erfindungsgemäß ist es von besonderem Vorteil, wenn der pH-Wert während des gesamten Waschverfahrens konstant gehalten wird. Aus diesem Grund hat sich die Verwendung von Puffer-Systemen als besonders vorteilhaft erwiesen. Demzufolge wird in die erfindungsgemäße Anti-Kratz-Beschichtung ein Puffer-System einbezogen.

Durch Einstellung des pH-Werts während des Waschverfahrens durch gezielte Auswahl der Zusammensetzung der Anti-Kratz-Beschichtung gelingt somit eine deutliche Verringerung des Ausschusses und Steigerung der Ausbeute an Substrat, insbesondere bei Halbzeug, wie beispielsweise bei Glasrohren, was besonders bei in großindustriellem Maßstab hergestellten Substraten Auswirkungen auf die Wirtschaftlichkeit hat.

Die Anti-Kratz-Beschichtung der Erfindung erfüllt damit mehrere Funktionen gleichzeitig: Diese stellt für ein Substrat, insbesondere Halbzeug, das einer Weiterverarbeitung unterzogen wird, einen ausreichenden Schutz gegenüber Beschädigungen der Oberfläche bereit und verhindert mögliche Kratzer während des Transports und der Lagerung. Weiterhin stellt die Anti-Kratz-Beschichtung der Erfindung in einem nachfolgenden Waschverfahren mit einer wässerigen Waschlösung einen pH-Wert bereit, welcher aus der Freisetzung des in der Anti-Kratz-Beschichtung enthaltenen pH-Puffer-Systems resultiert, was zu einer Einstellung eines kontrollierten, optimalen pH-Bereichs der Waschlösung und damit Vermeidung des nachteiligen Schrumpfungs-Effekts führt.

Die erfindungsgemäße Anti-Kratz-Beschichtung kann wasserlöslich oder auch wasserunlöslich sein. Die Anti-Kratz-Beschichtung wird im Rahmen der Erfindung als wasserunlöslich bezeichnet, wenn der Bestandteil der Beschichtung, welcher Kratzfestigkeit verleiht, nicht oder nur in sehr geringem Ausmaß in Wasser löslich ist.

Um der Anti-Kratz-Beschichtung entsprechende Kratzfestigkeits-Eigenschaften zu verleihen, werden Anti-Kratz-Mittel eingesetzt. Als Anti-Kratz-Mittel kann jede Verbindung oder eine Mischung von Verbindungen verwendet werden, welche Kratzfestigkeit bereitstellt. D.h. das/die Anti-Kratz-Mittel, die in der Anti-Kratz-Beschichtung der Erfindung eingesetzt werden können, sind nicht besonders beschränkt; es kann jede bekannte Verbindung mit Kratzfestigkeits-Eigenschaften verwendet werden. Es kommen hierfür zahlreiche Verbindungen in Frage, wie beispielsweise Lack-Schichten, insbesondere Hartlack-Schichten, verschiedenste Kunststoffe mit unterschiedlichester Kratz-, Stoß- und Abriebsfestigkeit, Sol-Gel-Schichten und viele andere mehr, die sämtlich als Anti-Kratz-Mittel für die erfindungsgemäße Anti-Kratz-Beschichtung geeignet sind. Besonders bevorzugte, jedoch nicht beschränkende Beispiele für Anti-Kratz-Beschichtungen sind nachfolgend beschrieben:

### Disponil SMO 120 (Agnique SMS-20):

Zusammensetzung: ein Polyoxyethylen(20)-sorbitanmono-Oleat der chemischen Formel C₆₄H₁₂₄O₂₆, das auch unter der Bezeichnung Polysorbat-80 bekannt ist. Es handelt sich um ein Polyoxyethylensorbitanmonooleat (kommerzieller Name auch Tween^{®} 80), das als nichtionisches Tensid in Kosmetika, Arzneimitteln, Futtermitteln und besonders als Emulgator in Lebensmitteln verwendet wird. Es ist eine viskose, wasserlösliche gelbe Flüssigkeit, die sich von Sorbitol und Ölsäure ableitet. Die hydrophilen Gruppen dieses Moleküls sind Polyether, Polymere von insgesamt 20 Ethylenoxiden. Es wird hauptsächlich in Speisen, speziell bei Nahrungsmitteln als Emulgator und Stabilisator benutzt. Verwendung findet es oft in Eiscreme, um zu verhindern, dass die Milchproteine die Fetttröpfchen vollständig umschließen, wobei Disponil SMO 120 Ketten und Netzstrukturen bildet, die Luft in der Mischung halten. Dadurch wird eine festere Struktur gebildet, die dafür sorgt, dass die Eiscreme beim Schmelzen ihre Form behält. Es ist in der EU als Lebensmittelzusatzstoff der Nummer E 433 zugelassen. Disponil SMO 120 kann als Grundlage einer Anti-Kratz-Beschichtung dienen, die beispielsweise 97 bis 98 % Disponil SMO 120 und 2 bis 3 % Wasser enthält. Der HLB-Wert (HLB: "Hydrophilic-Lipophilic Balance") von Disponil SMO 120 beträgt 15. Eine derartige Beschichtung wird in heißem Wasser aufgelöst und ist daher einfach entfernbar.

### RP40:

Zusammensetzung: eine 24%ige Dispersion von "modifizierten" Polyethylen-Wachsen in Wasser (Partikelgröße < 1 µm) kann als Grundlage für eine Anti-Krat-Beschichtung dienen. Eine Beschichtung mit RP 40 ist durch Waschen mit heißem Wasser entfernbar. RP40 findet als sogenanntes "Cold-End-Coating"-System in der Behälterglasindustrie bereits Verwendung.

### LIOMIX GL:

Zusammensetzung: ein 29,5% sekundärer Fettalkohol(C₁₂-C₁₄)-polyglykolether, 70% Wasser und 0,5% Stabilisator dienen als Grundlage für eine Anti-Kratz-Beschichtung. LIOMIX GL findet ebenfalls bereits als "Cold-End-Coating"-System in der Behälterglasindustrie Verwendung und ist für seine gering schäumende Wirkung bekannt (HLB 6,3).

Es können selbstverständlich auch beliebige andere kratzfeste Verbindungen oder Zusammensetzungen verwendet werden.

Erfindungsgemäß enthält die Anti-Kratz-Beschichtung ein pH-Puffer-System. Unter "pH-Puffer-System" wird erfindungsgemäß ein Puffer verstanden, welcher als Feststoff in die Anti-Kratz-Beschichtung einbezogen vorliegt und aus dieser in einem Waschverfahren durch Wasser herausgelöst wird und dadurch den pH-Wert in der Waschlösung im geeigneten Bereich einstellt.

pH-Puffer-Systeme sind dem Fachmann bekannt und in Standardwerken der Chemie ausführlich beschrieben. Folgende Puffer-Systeme haben sich jedoch als besonders vorteilhaft erwiesen: Phosphatpuffer, wie KH₂PO₄/NaOH (pH-Bereich 5,8-8,0) oder KH₂PO₄/Na₂HPO₄ (pH 5,4 bis 7,8) und viele andere, dem Fachmann bekannte Puffersysteme. Durch Einstellung der Anteile der Komponenten der Pufferlösung kann der gewünschte pH-Wert im möglichen Bereich beliebig eingestellt werden. Dies geht für einige Beispiel aus der nachfolgenden Tabelle hervor:

| Nutzbarer pH-Bereich | A | x ml B | eingestellter pH-Wert (Puffergemisch aus 50 ml A + x ml B) |
|---|---|---|---|
| 5,8-8,0 | 0,1 m KH₂PO₄ | 3,6 ml 0,1 m NaOH | 5,8 |
| 5,8-8,0 | 0,1 m KH₂PO₄ | 46,1 ml 0,1 m NaOH | 8,0 |

| | | | |
|---|---|---|---|
| Endvolumen der Mischungen = 100 ml Pufferlösung | | | |

Die obigen Systeme stellen nur beispielhafte pH-Puffer-Systeme dar, dem Fachmann sind weitere bekannt.

Die pH-Puffer-Systeme können derart ausgewählt werden, dass diese als Feststoffe in die Anti-Kratz-Beschichtung einbezogen und erst nach Zugabe von Wasser freigesetzt werden, um den gewünschten pH-Wert im Wasser einzustellen.

Erfindungsgemäß muss somit der pH-Wert in der Waschlösung nicht mehr eingestellt werden, indem weitere Verbindungen zugesetzt werden, sondern dieser stellt sich automatisch im gewünschten Bereich ein. Der pH-Wert kann somit in der Waschlösung vom Hersteller durch die Zusammensetzung der Anti-Kratz-Beschichtung vorgegeben werden und muss so nicht mehr vom Weiterverarbeiter eingestellt werden. Der Hersteller kann den pH-Wert und damit einen möglichen Säure- und/oder hydrolytischen und/oder alkalischen Angriff des Substratmaterials während der Weiterverarbeitung in wässrigen Lösungen vordefinieren und kontrolliert einstellen und so den Ausschuss durch unsachgemäße Behandlung, wie beispielsweise einen falsch eingestellten pH-Wert, verringern.

Eine weitere relativ kritische Bedingung beim Waschverfahren ist die Waschtemperatur, mit der gewaschen wird. Die Waschtemperatur sollte vorzugsweise im Bereich von über etwa 0°C bis etwa 90°C, bevorzugt zwischen etwa 20°C bis < 80°C liegen. Da es sich in überraschender Weise gezeigt hat, dass es vorteilhaft ist, die Waschtemperatur möglichst niedrig zu halten, ist eine Waschtemperatur im Bereich um Raumtemperatur in jedem fall unkritisch, so dass dies ohne weiteres von einem Weiterverarbeiter eines Substrats eingehalten werden kann. Bei Beachtung des beschriebenen Temperaturbereichs wird die Materialoberfläche nicht oder wenn, dann nur in sehr geringem Maße, angegriffen.

Nur von untergeordneter Bedeutung für ein Waschverfahren eines Substrats im Hinblick auf den Einfluss auf die Schrumpfung ("Shrinkage") ist jedoch die Waschdauer oder -zeit, wie lange das Substrat dem Waschmedium ausgesetzt wird. Zur Erzielung einer guten Reinigungswirkung bei gleichzeitiger geringer Schrumpfung ist es daher besonders zweckmäßig, bei niedrigen Temperaturen und längeren Zeiten zu waschen oder bei höheren Temperaturen und kürzeren Zeiten zu waschen, wobei letzteres weniger bevorzugt ist. Unter "niedriger Temperatur" wird eine Temperatur im unteren Bereich des angegebenen Bereichs verstanden, unter "höherer Temperatur" wird eine Temperatur, ausgewählt aus dem oberen Bereich des angegebenen Temperaturbereichs verstanden.

Als besonders vorteilhaft hat es sich erwiesen, wenn die Anti-Kratz-Beschichtung ein oder mehrere Zusätze enthält, welche eine Reinigungswirkung aufweisen. Reinigungszusätze können jegliche Arten von Verbindungen sein, die eine Reinigung unterstützen, insbesondere sind dies Verbindungen, die die Oberflächenspannung des Wassers herabsetzten, sowie Verbindungen mit einer hydrophilen und einer hydrophoben funktionellen Gruppe, wie zum Beispiel Tenside (anionische, kationische, neutrale Systeme), insbesondere Seifen. Als besonders vorteilhaft hat es sich erwiesen, wenn die Verbindungen, die eine Reinigung des zu behandelnden Substrats unterstützen, ebenfalls einen neutralen bis stark basischen pH-Wert, bevorzugt neutralen bis schwach alkalischen pH-Wert, besitzen oder sogar selbst als pH-Puffer wirken können.

Bevorzugte Reinigungszusätze sind z.B. anionische Tenside, wie Alkylbenzolsulfonate, Alkansulfonate, Fettalkoholsulfate, Fettalkoholethersulfate, Alkylphosphate, Alkyletherphosphate und Seifen in Form von Natrium- und Kaliumsalzen höherer Fettsäuren. Bevorzugte nichtionische Tenside sind zum Beispiel Fettalkoholethoxylate, Alkylphenolethoxylate, Fettaminethoxylate, Fettsäureesterethoxylate, Alkanolamide und Aminoxide. Bevorzugte kationische Tenside sind zum Beispiel Alkylammoniumverbindungen oder Imidazoliniumverbindungen und bevorzugte amphotere Tenside sind zum Beispiel Sulfobetain und Taurin.

Der oder die Reinigungszusätze liegen vorzugsweise in einer Menge von etwa 0,1 bis etwa 20 Gew.-%, bevorzugt von etwa 0,5 bis etwa 10,0. Gew.-%, insbesondere etwa 1 bis etwa 5 Gew.-% vor.

Unter dem Begriff "etwa" wird in Zusammenhang mit einem Zahlenwert oder Bereich ein bis zu 10% höherer oder geringerer Wert, bevorzugt bis zu 20% höherer oder geringerer Wert verstanden. Sämtliche Zwischenwerte eines Bereichs sollen explizit mitoffenbart sein.

In einer besonders bevorzugten Ausführungsform enthält die Beschichtung zusätzlich einen Indikator, der anzeigt, wann das pH-Puffer-System verbraucht ist bzw. wann die Waschlösung gewechselt werden muss, sofern es sich um einen diskontinuierlichen Waschprozess handelt, d.h. wenn das Waschmedium nicht kontinuierlich gewechselt wird. Bei diesen Indikatoren handelt es sich um solche Verbindungen, die als Feststoffe in die Anti-Kratz-Beschichtung einbezogen sind und in wässeriger Lösung einen Umschlagspunkt haben, welcher bei Übergang vom alkalischen ins neutrale oder saure Milieu vorliegt. Es können auch Mischungen von Indikatoren eingesetzt werden. Beispielhaft seien genannt: Lackmus, Bromthymolblau, Phenolphthalein oder dergleichen.

Der Indikator ist in relativ geringen Mengen in der Anti-Kratz-Beschichtung vorhanden, beispielsweise sind bereits Mengen von max. 1%, bevorzugt <0,1% und <0,01% ausreichend.

Nach einer weiteren vorteilhaften Ausführungsform ist der Indikator gleichzeitig Bestandteil des pH-Puffer-Systems oder der Reinigungszusätze.

Zusätzlich zu dem pH-Puffer-System kann die Anti-Kratz-Beschichtung somit für das Waschverfahren auch eine Reinigungswirkung und gegebenenfalls eine Indikatorfunktion bereitstellen.

Nach einer weiteren vorteilhaften Ausführungsform der Erfindung können zusätzlich neutrale Salze in die erfindungsgemäße Anti-Kratz-Beschichtung einbezogen werden, um die lonenkonzentration im Waschmedium zu erhöhen. Dies sind übliche Salze, die weder mit dem Substrat noch einem Bestandteil des Waschmediums reagieren. Beispielhaft seien genannt: NaCl, Na₂SO₄, CaCl₂, KCI, K₂SO₄, KBr, u.a. Die neutralen Salze liegen bevorzugt in einer Menge von etwa 0,5 bis etwa 5 Gew.-% in der Anti-Kratz-Beschichtung vor.

Weiterhin bevorzugt werden die Bestandteile der Anti-Kratz-Beschichtung derart aufeinander abgestimmt, dass es nicht zu unerwünschten Reaktionen wie z.B. Ausfällungen oder dergleichen von Komponenten durch Reaktion dieser untereinander kommt bzw. mit Komponenten, die durch den Weiterverarbeiter der Waschlösung zugesetzt werden können. Dies hängt von den verwendeten Bestandteilen ab und kann ohne weiteres vom Fachmann durch wenige orientierende Versuche festgestellt werden.

Das Substrat auf das die erfindungsgemäße Anti-Kratz-Beschichtung aufgebracht wird, ist erfindungsgemäß nicht besonders beschränkt. Es kann jede Art von Substrat aus einem beliebigen Material in jeder beliebigen Form zum Einsatz kommen, sofern eine Anti-Kratz-Beschichtung hierauf haftet. Beispielsweise kann das Substrat ausgewählt sein aus Glas, Metall, Kunststoff, insbesondere Gegenständen beliebiger Form, enthaltend oder bestehend hieraus. Besonders bevorzugt ist Glas, noch bevorzugter Glasrohre und ganz besonders bevorzugt sind solche Lampen-Glasrohre, die zur Verwendung in Fluoreszenzlampen, insbesondere für Hintergrundbeleuchtungen, vorgesehen sind.

Nach einer besonders bevorzugten Ausführungsform wird als Substrat ein Gegenstand, enthaltend oder bestehend aus Glas, insbesondere in Form eines Glasrohrs verwendet. Das Glas des Glasrohrs ist im Rahmen der Erfindung nicht besonders beschränkt. Besonders bevorzugt werden für die Rohrgläser Gläser auf Basis von Borosilikatgläsern oder Kalk-Natron-Gläsern verwendet. Es sollen jegliche bekannten Gläser umfasst sein.

Gläser, für die das beschriebene Verfahren besonders vorteilhaft sind, besitzen beispielsweise eine der folgenden Glaszusammensetzungen:

| | | |
|---|---|---|
| SiO₂ | 50-70 | Gew.-% |
| B₂O₃ | 5-20 | Gew.-% |
| Al₂O₃ | 1-13 | Gew.-% |
| Li₂O | 0-5 | Gew.-% |
| Na₂O | 0-10 | Gew.-% |
| K₂O | 0-10 | Gew.-% |
| Li₂O+Na₂O+K₂O | 3-15 | Gew.-% beträgt, und |
| MgO | 0-5 | Gew.-% |
| CaO | 0-10 | Gew.-% |
| SrO | 0-5 | Gew.-% |
| BaO | 0-15 | Gew.-%, |
| TiO₂ | 0-10 | Gew.-%, |
| bevorzugt | > 0,5-10 | Gew.-% |
| insbesondere | > 0,5 - 5 | Gew.-% beträgt, |
| ZrO₂ | 0-3 | Gew.-% |
| CeO₂ | 0-5 | Gew.-% |
| Fe₂O₃ | 0-1 1 | Gew.-% |
| WO₃ | 0-3 | Gew.-% |
| Bi₂O₃ | 0-3 | Gew.-% |
| MoO₃ | 0-3 | Gew.-%. |
| ZnO | 0-5 | Gew.% |
| SnO₂ | 0-2 | Gew.% |

sowie Rh, Hf, Ta, W, Re, Os, Ir, Pt, La, Pr, Nd, Sm, Eu, Gd, Tb, Dy, Ho, Er, Tm, Yb, Lu in oxidischer Form in Gehalten von 0-5 Gew.%
und gegebenenfalls Läutermittel in üblichen Konzentrationen, insbesondere ausgewählt aus Chloriden, Sulfaten, As₂O₃ und/oder Sb₂O₃, Ganz besonders bevorzugt findet SnO₂ für eine Hochtemperatur-Läuterung Verwendung.

Bevorzugt sind darüber hinaus auch sog. Kalk-Natron Gläser, beispielsweise mit folgenden Glaszusammensetzungsbereichen:

| | | |
|---|---|---|
| SiO₂ | 50-80 | Gew.-% |
| B₂O₃ | 0-5 | Gew.-% |
| Al₂O₃ | 0-5 | Gew.-% |
| Li₂O | 0-5 | Gew.-% |
| Na₂O | 0-10 | Gew.-% |
| K₂O | 0-10 | Gew.-% |
| Li₂O+Na₂O+K₂O | 3-20 | Gew.-% beträgt, und |
| MgO | 0-5 | Gew.-% |
| CaO | 0-10 | Gew.-% |
| SrO | 0-5 | Gew.-% |
| BaO | 0-15 | Gew.-%, |
| MgO+CaO+SrO+BaO | 3-20 | Gew.-% |
| TiO₂ | 0-10 | Gew.-%, |
| bevorzugt | > 0,5-10 | Gew.-% |
| insbesondere | > 0,5 - 5 | Gew.-% beträgt, |
| ZrO₂ | 0-3 | Gew.-% |
| CeO₂ | 0-5 | Gew.-% |
| Fe₂O₃ | 0-1 | Gew.-% |
| WO₃ | 0-3 | Gew.-% |
| Bi₂O₃ | 0-3 | Gew.-% |
| MoO₃ | 0-3 | Gew.-%. |
| ZnO | 0-5 | Gew.% |
| SnO₂ | 0-2 | Gew.% |

sowie Rh, Hf, Ta, W, Re, Os, Ir, Pt, La, Pr, Nd, Sm, Eu, Gd, Tb, Dy, Ho, Er, Tm, Yb, Lu in oxidischer Form in Gehalten von 0-5 Gew.%
und gegebenenfalls Läutermittel in üblichen Konzentrationen, insbesondere ausgewählt aus Chloriden, Sulfaten, As₂O₃ und/oder Sb₂O₃. Ganz besonders bevorzugt findet SnO₂ für eine Hochtemperatur-Läuterung Verwendung.

In den eingesetzten Glaszusammensetzungen kann es von Vorteil sein, wenn gleichzeitig Ceroxid und Zinnoxid vorliegen. Hierdurch kann eine mögliche Verfärbung von zu hohen Gehalten an Ceroxid durch die Gegenwart von Zinnoxid unterdrückt werden.

Die Form des Substrats ist ebenfalls erfindungsgemäß nicht besonders beschränkt. Für die bevorzugt eingesetzten Glasrohre kann jeder, vorzugsweise in einer Lampe, verwendbare Querschnitt zum Einsatz kommen. Übliche Querschnitte einer Lampe sind an die räumlichen Gegebenheiten, zum Beispiel bei einer Hintergrundbeleuchtung, angepasst. Bevorzugt sind runde, ovale, rechteckige oder flache, rechteckige Querschnitte (zum Beispiel Planon^{®} von Osram), besonders bevorzugt solche Querschnitte, die in Lampen für Hintergrundbeleuchtungen verwendet werden, wie flache rechteckige Querschnitte.

Die Glasrohre, die erfindungsgemäß bevorzugt zum Einsatz kommen, können zu Hüllengläsern von Fluoreszenzlampen, bevorzugter miniaturisierten Fluoreszenzlampen, entsprechend weiterverarbeitet werden. Hierzu werden die Glasrohre nach dem beschriebenen Waschverfahren vorzugsweise einer Temperaturbehandlung unterzogen. Hierbei handelt es sich beispielsweise um einen Temperschritt, z.B. den sog. "Bakingprozess", wobei Maximaltemperaturen im Bereich von beispielsweise etwa 500°C bis etwa 750°C, typischerweise 600°C bis 700°C eingesetzt werden, bei dem eine Fluoreszenzschicht auf der Innenseite des Rohres eingebrannt wird.

Die aus den Glasrohren herstellbaren Fluoreszenzlampen können vorzugsweise zur Hintergrundbeleuchtung, beispielsweise von Flachbildschirmen (sog.

Backlights), insbesondere von LCD-TFT Displays, eingesetzt werden. Für diese Anwendung weisen derartige Lampen sehr kleine Dimensionen auf und dementsprechend hat das Lampenglas vorzugsweise nur eine äußerst geringe Dicke. Zum Beispiel kann das Glasrohr rohrförmig sein, wobei der Durchmesser bevorzugt < 1,0 cm, besonders bevorzugt < 0,8 cm, insbesondere bevorzugt < 0,7 cm, ganz besonders bevorzugt < 0,5 cm aufweist. Die Wandstärke des rohrförmigen Hüllglases ist bevorzugt < 1 mm, insbesondere < 0,7 mm. In einer alternativen Ausgestaltung kann das Glasrohr des Leuchtmittels ein Flachglas mit einer Dicke von < 1 cm sein. Bevorzugte Displays sowie Bildschirme sind so genannte Flachdisplays, verwendet in Laptops, insbesondere flache Backlightanordnungen.

Die herstellbaren Fluoreszenzlampen sind bevorzugt miniaturisierte Backlightlampen. Die Lampen können sich aufgliedern in einen Mittelteil, der bevorzugt weitgehend transparent ist, und in Form eines Hüllenglas vorliegt, sowie zwei Enden, die mit entsprechenden Anschlüssen, durch Einbringen von Metall oder Metalllegierungsdrähten, versehen sein können. Es besteht die Möglichkeit, das Metall bzw. die Metalldrähte in einem Temperschritt mit dem Hüllenglas zu verschmelzen. Das Metall bzw. die Metalllegierungsdrähte sind Elektrodendurchführungen und/oder Elektroden. Bevorzugt sind diese Elektrodendurchführungen Wolfram- oder Molybdän-Metalle oder Kovar-Legierungen bzw. Dumet-Legierungen. Die thermische Längenausdehnung (CTE) des Hüllenglases stimmt bevorzugt weitgehend mit der Längenausdehnung (CTE) der Elektrodendurchführungen überein, so dass im Bereich der Durchführungen keine Spannungen bzw. nur definiert und gezielt eingesetzte Spannungen auftreten. Insbesondere bevorzugte Backlight-Lampen sind EEFLs (external electrode fluorescent lamp) ohne Elektrodendurchführung, da bei einem elektrodenlosen EEFL-Backlight die Einkoppelung mit Hilfe elektrischer Felder erfolgt. Es sind auch CCFL-Systeme (cold-cathode fluorescent lamp) bekannt, wobei die Zündung des Plasmas über innenliegende Elektroden erfolgt.

Gegenstand der Erfindung ist auch ein Verfahren zur Herstellung der erfindungsgemäßen Anti-Kratz-Beschichtung mit den Schritten:
- Aufsprühen einer wässerigen Mischung, umfassend zumindest ein Anti-Kratz-Mittel, ein pH-Puffersystem sowie optional weitere Zusätze, ausgewählt aus Reinigungszusätzen, Indikatoren und neutralen Salzen, in Wasser, auf ein Substrat mittels eines Zerstäubers und
- Trocknen der Mischung unter Erhalt einer Anti-Kratz-Beschichtung.
   Unter "wässeriger Mischung" wird die Mischung aus den Bestandteilen der Anti-Kratz-Beschichtung in Wasser verstanden. Hierbei kann es sich um eine wässerige Lösung, Aufschlämmung oder Suspension bzw. Dispersion handeln, je nach den ausgewählten Bestandteilen. Die obligatorischen und optionalen Bestandteile der Anti-Kratz-Beschichtung wurden bereits im Einzelnen beschrieben.
   Das Aufsprühen erfolgt bevorzugt mittels eines üblichen Zerstäubers, es kann aber auch ein anderes Auftragsverfahren für eine Schicht verwendet werden, welches auf dem Aufbringen eines flüssigen Systems auf eine Oberfläche beruht.
   Weiterhin bezieht sich die vorliegende Erfindung auf die Verwendung der erfindungsgemäßen Anti-Kratz-Beschichtung zur Reinigung eines Substrats, umfassend
- Aufbringen einer erfindungsgemäßen Anti-Kratz-Beschichtung auf ein Substrat,
- Unterziehen des Substrats, auf dem eine Anti-Kratz-Beschichtung aufgebracht ist, einem Waschverfahren, das aufweist
- Legen des Substrats in Wasser unter Herauslösen von Zusätzen aus der Anti-Kratz-Beschichtung oder Auflösen der Anti-Kratz-Beschichtung in Wasser, wobei sich ein pH-Wert im Bereich von 7 bis 12, bevorzugt im Bereich von 7 bis 9, ganz besonders bevorzugt im Bereich von 7 bis 8, einstellt und
- Herausnehmen des Substrats.

Eine besonders bevorzugte Ausführungsform dieser Erfindung besteht darin, dass ein Substrat, auf das die erfindungsgemäße Anti-Kratz-Beschichtung aufgebracht wurde, in reines Wasser ohne Zusätze gelegt wird und die für das Waschverfahren benötigten Substanzen von der Anti-Kratz-Beschichtung freigesetzt werden. Es handelt sich hierbei um das pH-Puffer-System und optional weitere Zusätze, wie Reinigungszusätze, Indikatoren, neutrale Salze und dergleichen.

Wie bereits ausgeführt ist die Waschtemperatur relativ unkritisch, wobei diese bevorzugt im Bereich von über etwa 0°C bis etwa 90°C, insbesondere etwa 20°C bis < 80°C eingestellt wird. Ganz besonders bevorzugt wird die Waschtemperatur in einem Temperaturbereich von etwa 20°C bis < 70°C, besonders bevorzugt von etwa 25°C bis < 50°C eingestellt.

Eine übliche Waschzeit für ein Substrat liegt etwa im Bereich von etwa 10 bis etwa 120 min, kann aber in Einzelfällen auch deutlich darüber oder darunter liegen.

Nach einer weiteren Ausführungsform kann dem Waschmedium, d.h. dem Wasser, ein oder mehrere Komplexbildner zugegeben werden, um z.B. herausgelöste lonen, wie Alkalien, Erdalkalien, zu komplexieren, somit zu binden und eine Reaktion mit dem Substrat bzw. Komponenten des Waschmediums zu unterbinden. Geeignete Komplexbildner sind in der chemischen Literatur beschrieben, beispielsweise kann es sich um EDTA, Poly(hydroxycarboxylate), Kronenether oder auch andere handeln.

Das Waschmedium ist Wasser, vorzugsweise ohne irgendwelche Zusätze, in dem sich die Bestandteile aus der Anti-Kratz-Beschichtung lösen, so dass eine Waschlösung resultiert, welche die reinigende Wirkung aufweist. Es besteht auch die Möglichkeit, dass sich die Anti-Kratz-Beschichtung während des Waschens vollständig in Wasser löst, so dass diese gleichzeitig mit dem Waschen entfernt werden kann. Es handelt sich dann um eine temporäre Schicht. Es kann aber auch eine permanente Schicht eingesetzt werden, die als Anti-Kratz-Beschichtung nach dem Waschverfahren auf dem Substrat zurückbleibt und diese weiterhin vor Kratzern schützt.

Besonders bevorzugt wird das Waschverfahren in einem Behälter geeigneter Größe durchgeführt, der mit Wasser, vorzugsweise ohne Zusätze, gefüllt ist. Besonders bevorzugt handelt es sich bei dem Behälter um ein Ultraschallbad, um die Reinigungswirkung zu verbessern.

Bevorzugte Substrate sind Halbzeug, insbesondere Gegenstände, enthaltend oder bestehend aus Glas, Kunststoff oder Metall, wie beispielsweise Glasrohre.

Die obigen Ausführungen zur Anti-Kratz-Beschichtung gelten für die erfindungemäße Verwendung sinngemäß.

Nachfolgend wird die vorliegende Erfindung anhand eines Beispiels erläutert, welches die erfindungsgemäße Lehre veranschaulichen, diese aber nicht beschränken sollen.

### Ausführungsbeispiel:

Es wurden Glasrohre aus der nachfolgenden Borosilikatglas-Zusammensetzung hergestellt:

| | Ausf. 1 |
|---|---|
| **SiO₂** | 66 |
| **Al₂O₃** | 2,5 |
| **B₂O₃** | 18 |
| **Li₂O** | 0,5 |
| **Na₂O** | 0,5 |
| **K₂O** | 7,5 |
| **MgO** | |
| **CaO** | |
| **SrO** | |
| **BaO** | |
| **ZnO** | 0,5 |
| **ZrO₂** | |
| **As₂O₃** | |
| **Sb₂O₃** | 0,5 |
| **Fe₂O₃** | |
| **TiO₂** | 4 |
| **Summe** | 100 |

Die Geometrie der Rohre war wie folgt:
Außendurchmesser: 3,4 mm
Innendurchmesser: 2,4 mm
Wanddicke: 0,5 mm und
Länge der Rohre: 500 mm.

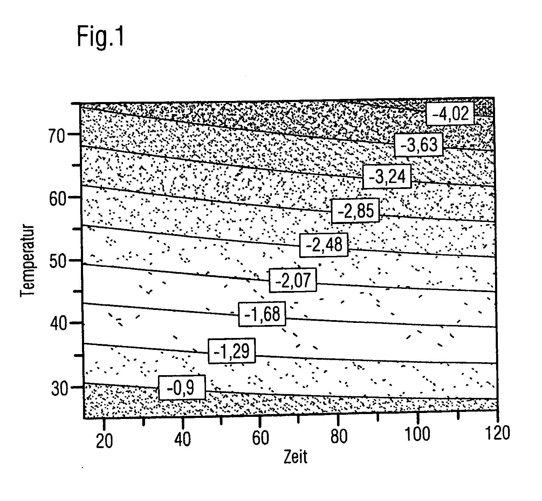

Glasrohre mit der obigen Zusammensetzung und den genannten Abmessungen wurden einem Reinigungsverfahren unterzogen, um die Auswirkungen auf die Glasrohre zu demonstrieren. Hierbei wurde der Schrumpf ("Shrinkage") des jeweiligen Glasrohres in mm abhängig von der Waschzeit und Waschtemperatur für verschiedene pH-Werte untersucht. Die Ergebnisse der Versuche sind in den beigefügten Figuren 1 bis 3 dargestellt. In den Figuren zeigen
- Figur 1: den Schrumpf ("Shrinkage") des Glasrohres in mm, abhängig von der Waschzeit und Waschtemperatur bei einem pH-Wert von 4,5;
- Figur 2: den Schrumpf ("Shrinkage") des Glasrohres in mm, abhängig von der Waschzeit und Waschtemperatur bei einem pH-Wert von 7;
- Figur 3: den Schrumpf ("Shrinkage") des Glasrohres in mm, abhängig von der Waschzeit und Waschtemperatur bei einem pH-Wert von 9 und
- Figur 4: ein beispielhaftes Temperatur-Zeit-Programm für einen "Baking Prozeß".

Figur 1 zeigt das Waschverfahren bei einem pH-Wert von 4,5. Der pH-Wert liegt außerhalb des bevorzugten pH-Bereichs und ist zu sauer eingestellt, was sich in einer deutlichen Schrumpfungszunahme bei höheren Temperaturbereichen zeigt. Bereits über 45°C wird ein deutlich nachteiliger Effekt auf das Glasrohr beobachtet, der eine Formdeformation des Glasrohr zur Folge hat, welche das Glas für den beabsichtigen Verwendungszweck in einer Lampe zur Hintergrundbeleuchtung unbrauchbar macht.

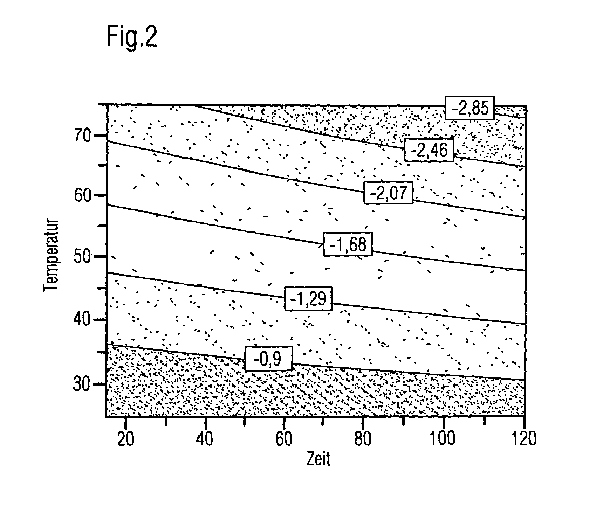

Figur 2 zeigt ein Waschverfahren, durchgeführt mit einem pH-Wert von 7. Die in Figur 1 dargestellten Bereiche mit unterschiedlichem Schrumpf werden deutlich auseinandergezogen, so dass eine Temperaturbehandlung bis zu Temperaturen vorzugsweise unterhalb 70°C möglich ist.

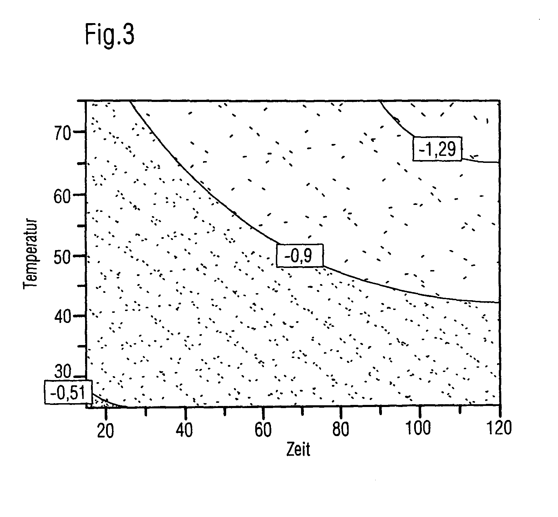

Figur 3 zeigt ein Waschverfahren, durchgeführt mit einem pH-Wert von 9. Der pH-Bereich von 8 bis 9 ist besonders vorteilhaft, wie Figur 3 belegt. Bis oberhalb von 70°C findet auch bei langen Behandlungszeiten von 120 min keine wesentliche Schrumpfung statt, so dass die gewaschenen Gläser praktisch keiner Formdeformation unterliegen.

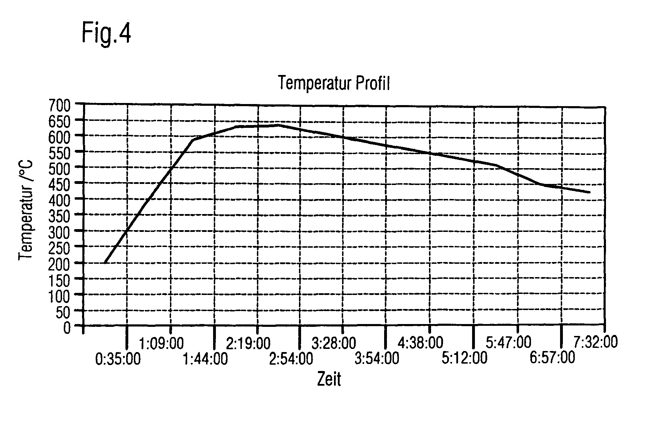

Figur 4 zeigt ein beispielhaftes Temperatur-Zeit-Programm für einen "Baking Prozeß". Selbstverständlich können auch andere Programmabläufe eingestellt werden.

Die Bereitstellung einer erfindungsgemäßen Anti-Kratz-Beschichtung ermöglicht die oben dargestellten nachteiligen Auswirkungen auf Glasrohre zu verhindern.

Mit der vorliegenden Erfindung wird somit erstmals eine Anti-Kratz-Beschichtung bereitgestellt, in der mehrere Funktionalitäten kombiniert werden können. Hierdurch kann neben der Schutzfunktion vor Kratzern auch eine Schrumpfung (Shrinkage"), bedingt durch ein Waschverfahren und anschließende Temperaturbehandlung von Halbzeug deutlich verringert oder völlig unterdrückt werden. Hierdurch verringert sich der Ausschuß bei der Halbzeugherstellung, wodurch die Wirtschaftlichkeit deutlich gesteigert werden kann.

Die vorliegende Erfindung umfasst die Aspekte, die in den nachfolgenden Sätzen niedergelegt sind, die einen Teil der Beschreibung darstellen, aber keine Ansprüche in Übereinstimmung mit der Entscheidung **J15/88 der Beschwerdekammer** sind:

### Sätze:

1. Anti-Kratz-Beschichtung auf einem Substrat, umfassend ein oder mehrere Anti-Kratz-Mittel und
ein pH-Puffer-System, das in wässeriger Lösung einen pH-Wert im Bereich von neutral bis stark alkalisch, insbesondere einen pH-Wert im Bereich von etwa 7 bis etwa 12, bevorzugt einem pH-Wert im Bereich von neutral bis schwach alkalisch, insbesondere einen pH-Wert im Bereich von etwa 7 bis etwa 9 aufweist.
2. Anti-Kratz-Beschichtung nach Satz 1, **dadurch gekennzeichnet, dass** das Puffersystem ausgewählt ist aus festen Puffern, bevorzugt Phosphatpuffern und dergleichen.
3. Anti-Kratz-Beschichtung nach Satz 1 oder 2, **dadurch gekennzeichnet, dass** der Anti-Kratz-Beschichtung ein oder mehrere feste Verbindungen zugesetzt sind, welche eine Reinigungswirkung aufweisen.
4. Anti-Kratz-Beschichtung nach einem der vorangehenden Sätze 1 bis 3, **dadurch gekennzeichnet, dass** die ein oder mehreren Verbindungen mit Reinigungswirkung einen neutralen bis stark alkalischen pH-Wert, bevorzugt neutralen bis schwach alkalischen pH-Wert, aufweisen.
5. Anti-Kratz-Beschichtung nach einem der vorangehenden Sätze 1 bis 4, **dadurch gekennzeichnet, dass** die ein oder mehreren Verbindungen mit Reinigungswirkung selbst Puffer darstellen.
6. Anti-Kratz-Beschichtung nach einem der vorangehenden Sätze 1 bis 5, **dadurch gekennzeichnet, dass** die ein oder mehreren Verbindungen mit Reinigungswirkung, ausgewählt sind aus Tensiden, insbesondere anionischen, kationischen, nichtionischen oder amphoteren Tensiden, bevorzugt anionischen Tenside, wie Seifen.
7. Anti-Kratz-Beschichtung nach Satz 6, **dadurch gekennzeichnet, dass** das Tensid in der Anti-Kratz-Beschichtung in einer Menge von etwa 0,1 bis etwa 20 Gew.-%, bevorzugt von etwa 0,5 bis etwa 10,0 Gew.-%, ganz besonders bevorzugt 1 bis 5 Gew.-%, vorhanden ist.
8. Anti-Kratz-Beschichtung nach einem der vorangehenden Sätze 1 bis 7, **dadurch gekennzeichnet, dass** die Anti-Kratz-Beschichtung einen festen Indikator enthält, der anzeigt, wann das pH-Puffer-System verbraucht ist.
9. Anti-Kratz-Beschichtung nach Satz 8, **dadurch gekennzeichnet, dass** die Anti-Kratz-Beschichtung den festen Indikator in einer Menge von max. 1%, bevorzugt <0,1% und <0,01% enthält.
10. Anti-Kratz-Beschichtung nach einem der vorangehenden Sätze 1 bis 9, **dadurch gekennzeichnet, dass** die Anti-Kratz-Beschichtung ein oder mehrere neutrale Salze enthält.
11. Anti-Kratz-Beschichtung nach Satz 10, **dadurch gekennzeichnet, dass** die Anti-Kratz-Beschichtung ein oder mehrere neutrale Salze in einer Menge von etwa 0,5 bis etwa 5 Gew.-% enthält.
12. Anti-Kratz-Beschichtung nach einem der vorangehenden Sätze 1 bis 11, **dadurch gekennzeichnet, dass** das Substrat Halbzeug darstellt.
13. Anti-Kratz-Beschichtung nach einem der vorangehenden Sätze 1 bis 12, **dadurch gekennzeichnet, dass** das Substrat Glas, Kunststoff oder Metall enthält oder hieraus besteht.
14. Anti-Kratz-Beschichtung nach einem der vorangehenden Sätze 1 bis 13, **dadurch gekennzeichnet, dass** das Substrat aus Glas besteht.
15. Anti-Kratz-Beschichtung nach einem der vorangehenden Sätze 1 bis 14, **dadurch gekennzeichnet, dass** das Substrat ein Glasrohr darstellt.
16. Anti-Kratz-Beschichtung nach einem der vorangehenden Sätze 1 bis 15, **dadurch gekennzeichnet, dass** das Substrat ausgewählt ist aus einem Borosilikatglas oder Natron-Kalk-Glas.
17. Anti-Kratz-Beschichtung nach einem der vorangehenden Sätze 1 bis 16, **dadurch gekennzeichnet, dass** das Substrat ein Borosilikatglas darstellt, das eine der folgenden Glaszusammensetzungen aufweist:

| | | |
|---|---|---|
| SiO₂ | 50-70 | Gew.-% |
| B₂O₃ | 5-20 | Gew.-% |
| Al₂O₃ | 1-13 | Gew.-% |
| Li₂O | 0-5 | Gew.-% |
| Na₂O | 0-10 | Gew.-% |
| K₂O | 0-10 | Gew.-% |
| Li₂O+Na₂O+K₂O | 3-15 | Gew.-% beträgt, und |
| MgO | 0-5 | Gew.-% |
| CaO | 0-10 | Gew.-% |
| SrO | 0-5 | Gew.-% |
| BaO | 0-15 | Gew.-%, |
| TiO₂ | 0-10 | Gew.-%, |
| bevorzugt | > 0,5-10 | Gew.-% |
| insbesondere | > 0,5 - 5 | Gew.-% beträgt, |
| ZrO₂ | 0-3 | Gew.-% |
| CeO₂ | 0-5 | Gew.-% |
| Fe₂O₃ | 0-1 1 | Gew.-% |
| WO₃ | 0-3 | Gew.-% |
| Bi₂O₃ | 0-3 | Gew.-% |
| MoO₃ | 0-3 | Gew.-%. |
| ZnO | 0-5 | Gew.% |
| SnO₂ | 0-2 | Gew.% |

sowie Rh, Hf, Ta, W, Re, Os, Ir, Pt, La, Pr, Nd, Sm, Eu, Gd, Tb, Dy, Ho, Er, Tm, Yb, Lu in oxidischer Form in Gehalten von 0-5 Gew.%
und gegebenenfalls Läutermittel in üblichen Konzentrationen, insbesondere ausgewählt aus Chloriden, Sulfaten, As₂O₃ und/oder Sb₂O₃.
18. Anti-Kratz-Beschichtung nach einem der vorangehenden Sätze 1 bis 16, **dadurch gekennzeichnet, dass** das Substrat ein Kalk-Natron-Glas darstellt, das eine der folgenden Glaszusammensetzungen aufweist:

| | | |
|---|---|---|
| SiO₂ | 50-80 | Gew.-% |
| B₂O₃ | 0-5 | Gew.-% |
| Al₂O₃ | 0-5 | Gew.-% |
| Li₂O | 0-5 | Gew.-% |
| Na₂O | 0-10 | Gew.-% |
| K₂O | 0-10 | Gew.-% |
| Li₂O+Na₂O+K₂O | 3-20 | Gew.-% beträgt, und |
| MgO | 0-5 | Gew.-% |
| CaO | 0-10 | Gew.-% |
| SrO | 0-5 | Gew.-% |
| BaO | 0-15 | Gew.-%, |
| MgO+CaO+SrO+BaO | 3-20 | Gew.-% |
| TiO₂ | 0-10 | Gew.-%, |
| bevorzugt | > 0,5-10 | Gew.-% |
| insbesondere | > 0,5-5 | Gew.-% beträgt, |
| ZrO₂ | 0-3 | Gew.-% |
| CeO₂ | 0-5 | Gew.-% |
| Fe₂O₃ | 0-1 | Gew.-% |
| WO₃ | 0-3 | Gew.-% |
| Bi₂O₃ | 0-3 | Gew.-% |
| MoO₃ | 0-3 | Gew.-%. |
| ZnO | 0-5 | Gew.% |
| SnO₂ | 0-2 | Gew.% |

sowie Rh, Hf, Ta, W, Re, Os, Ir, Pt, La, Pr, Nd, Sm, Eu, Gd, Tb, Dy, Ho, Er, Tm, Yb, Lu in oxidischer Form in Gehalten von 0-5 Gew.%.
19. Anti-Kratz-Beschichtung nach einem der vorangehenden Sätze 1 bis 18, **dadurch gekennzeichnet, dass** die Form des Glasrohrs ausgewählt ist aus rundem, ovalem, rechteckigem oder flachem, rechteckigem Querschnitt.
20. Anti-Kratz-Beschichtung nach einem der vorangehenden Sätze 1 bis 19, **dadurch gekennzeichnet, dass** die Anti-Kratz-Beschichtung eine temporäre oder permanente Beschichtung darstellt.
21. Anti-Kratz-Beschichtung nach einem der vorangehenden Sätze 1 bis 20, **dadurch gekennzeichnet, dass** die Anti-Kratz-Beschichtung wasserlöslich oder wasserunlöslich ist.
22. Anti-Kratz-Beschichtung nach einem der vorangehenden Sätze 1 bis 20, **dadurch gekennzeichnet, dass** die Anti-Kratz-Beschichtung teilweise wasserlöslich ist.
23. Anti-Kratz-Beschichtung nach einem der vorangehenden Sätze 1 bis 22, **dadurch gekennzeichnet, dass** in der Anti-Kratz-Beschichtung nur die Zusätze, ausgewählt aus dem Puffer-System, neutralen Salzen, Indikatoren und Reinigungszusätzen wasserlöslich sind.
24. Verfahren zur Herstellung einer Anti-Kratz-Beschichtung nach einem der vorangehenden Sätze 1 bis 23 mit den Schritten:
- Aufsprühen einer wässerigen Mischung, umfassend zumindest ein Anti-Kratz-Mittel, ein pH-Puffersystem sowie optional weitere Zusätze ausgewählt aus Reinigungszusätzen, Indikatoren und neutralen Salzen in Wasser, auf ein Substrat mittels eines Zerstäubers und
- Trocknen der Mischung unter Erhalt einer Anti-Kratz-Beschichtung.
25. Verwendung einer Anti-Kratz-Beschichtung nach einem der Sätze 1 bis 23 zur Reinigung eines Substrats, umfassend
- Aufbringen einer Anti-Kratz-Beschichtung auf ein Substrat,
- Unterziehen des Substrats, auf dem eine Anti-Kratz-Beschichtung aufgebracht ist, einem Waschverfahren, das aufweist
- Legen des Substrats in Wasser unter Herauslösen von Zusätzen aus der Anti-Kratz-Beschichtung oder Auflösen der Anti-Kratz-Beschichtung in Wasser, wobei sich ein pH-Wert im Bereich von 7 bis 12, bevorzugt im Bereich von 7 bis 9, einstellt und
- Herausnehmen des Substrats.
26. Verwendung nach Satz 25, **dadurch gekennzeichnet,** das die Waschtemperatur im Bereich von über etwa 0°C bis etwa 90°C, insbesondere etwa 20°C bis < 80°C eingestellt wird.
27. Verwendung nach Satz 25 oder 26, **dadurch gekennzeichnet, dass** das Waschen des Substrats bei einem pH-Wert im Bereich von 7 bis 8 durchgeführt wird.
28. Verwendung nach einem der Sätze 25 bis 27, **dadurch gekennzeichnet, dass** die Waschtemperatur in einem Temperaturbereich von etwa 20°C bis < 70°C, besonders bevorzugt von etwa 25°C bis < 50°C eingestellt wird.
29. Verwendung nach einem der vorangehenden Sätze 25 bis 28**, dadurch gekennzeichnet, dass** die Waschzeit etwa 10 bis etwa 120 min beträgt.
30. Verwendung nach einem der vorangehenden Sätze 25 bis 29, **dadurch gekennzeichnet, dass** dem Waschmedium in Form von Wasser ein oder mehrere Komplexbildner zugegeben werden.
31. Verwendung nach einem der vorangehenden Sätze 25 bis 30, **dadurch gekennzeichnet, dass** niedrigere Temperaturen und längere Waschzeiten oder höheren Temperaturen und kürzeren Waschzeiten zum Waschen kombiniert werden.
32. Verwendung nach einem der vorangehenden Sätze 25 bis 31, **dadurch gekennzeichnet, dass** als Substrat Halbzeug eingesetzt wird.
33. Verwendung nach einem der vorangehenden Sätze 25 bis 32, **dadurch gekennzeichnet, dass** als Substrat ein Gegenstand, enthaltend oder bestehend aus Glas, Kunststoff oder Metall, eingesetzt wird.
34. Verwendung nach einem der vorangehenden Sätze 25 bis 33, **dadurch gekennzeichnet, dass** als Substrat Glas eingesetzt wird, insbesondere ein Glasrohr.
35. Verwendung nach einem der vorangehenden Sätze 25 bis 34, **dadurch gekennzeichnet, dass** das Substrat ausgewählt wird aus einem Borosilikatglas oder Natron-Kalk-Glas.
36. Verwendung nach einem der vorangehenden Sätze 25 bis 35, **dadurch gekennzeichnet, dass** als Substrat ein Borosilikatglas eingesetzt wird, das eine der folgenden Glaszusammensetzungen aufweist:

| | | |
|---|---|---|
| SiO₂ | 50-70 | Gew.-% |
| B₂O₃ | 5-20 | Gew.-% |
| Al₂O₃ | 1-13 | Gew.-% |
| Li₂O | 0-5 | Gew.-% |
| Na₂O | 0-10 | Gew.-% |
| K₂O | 0-10 | Gew.-% |
| Li₂O+Na₂O+K₂O | 3-15 | Gew.-% beträgt, und |
| MgO | 0-5 | Gew.-% |
| CaO | 0-10 | Gew.-% |
| SrO | 0-5 | Gew.-% |
| BaO | 0-15 | Gew.-%, |
| TiO₂ | 0-10 | Gew.-%, |
| bevorzugt | > 0,5-10 | Gew.-% |
| insbesondere | > 0,5 - 5 | Gew.-% beträgt, |
| ZrO₂ | 0-3 | Gew.-% |
| Ce0₂ | 0-5 | Gew.-% |
| Fe₂O₃ | 0-1 | Gew.-% |
| WO₃ | 0-3 | Gew.-% |
| Bi₂O₃ | 0-3 | Gew.-% |
| MoO₃ | 0-3 | Gew.-%. |
| ZnO | 0-5 | Gew.% |
| SnO₂ | 0-2 | Gew.% |

sowie Rh, Hf, Ta, W, Re, Os, Ir, Pt, La, Pr, Nd, Sm, Eu, Gd, Tb, Dy, Ho, Er, Tm, Yb, Lu in oxidischer Form in Gehalten von 0-5 Gew.%
und gegebenenfalls Läutermittel in üblichen Konzentrationen, insbesondere ausgewählt aus Chloriden, Sulfaten, As₂O₃ und/oder Sb₂O₃.
37. Verwendung nach einem der vorangehenden Sätze 25 bis 36, **dadurch gekennzeichnet, dass** als Substrat ein Kalk-Natron-Glas eingesetzt wird, das eine der folgenden Glaszusammensetzungen aufweist:

| | | |
|---|---|---|
| SiO₂ | 50-80 | Gew.-% |
| B₂O₃ | 0-5 | Gew.-% |
| Al₂O₃ | 0-5 | Gew.-% |
| Li₂O₃ | 0-5 | Gew.-% |
| Na₂O | 0-10 | Gew.-% |
| K₂O | 0-10 | Gew.-% |
| Li₂O+Na₂O+K₂O | 3-20 | Gew.-% beträgt, und |
| MgO | 0-5 | Gew.-% |
| CaO | 0-10 | Gew.-% |
| SrO | 0-5 | Gew.-% |
| BaO | 0-15 | Gew.-%, |
| MgO+CaO+SrO+BaO | 3-20 | |
| TiO₂ | 0-10 | Gew.-%, |
| bevorzugt | > 0,5-10 | Gew.-% |
| insbesondere | > 0,5 - 5 | Gew.-% beträgt, |
| ZrO₂ | 0-3 | Gew.-% |
| CeO₂ | 0-5 | Gew.-% |
| Fe₂O₃ | 0 - 1 | Gew.-% |
| WO₃ | 0-3 | Gew.-% |
| Bi₂O₃ | 0-3 | Gew.-% |
| MoO₃ | 0-3 | Gew.-%. |
| ZnO | 0-5 | Gew.% |
| SnO₂ | 0-2 | Gew.% |

sowie Rh, Hf, Ta, W, Re, Os, Ir, Pt, La, Pr, Nd, Sm, Eu, Gd, Tb, Dy, Ho, Er, Tm, Yb, Lu in oxidischer Form in Gehalten von 0-5 Gew.%.
38. Verwendung nach einem der vorangehenden Sätze 34 bis 37, **dadurch gekennzeichnet, dass** die Form des Glasrohrs ausgewählt wird aus rundem, ovalem, rechteckigem oder flachem, rechteckigem Querschnitt.

## Patentansprüche

1. Anti-Kratz-Beschichtung auf einem Substrat, umfassend
ein oder mehrere Anti-Kratz-Mittel und
ein pH-Puffer-System, das in wässeriger Lösung einen pH-Wert im Bereich von neutral bis stark alkalisch, insbesondere einen pH-Wert im Bereich von etwa 7 bis etwa 12, bevorzugt einem pH-Wert im Bereich von neutral bis schwach alkalisch, insbesondere einen pH-Wert im Bereich von etwa 7 bis etwa 9 aufweist.

2. Anti-Kratz-Beschichtung nach Anspruch 1, **dadurch gekennzeichnet, dass** das Puffersystem ausgewählt ist aus festen Puffern, bevorzugt Phosphatpuffern und dergleichen.

3. Anti-Kratz-Beschichtung nach Anspruch 1 oder 2, **dadurch gekennzeichnet, dass** der Anti-Kratz-Beschichtung weiterhin zumindest einen der nachfolgenden Zusätze aufweist:
- ein oder mehrere feste Verbindungen, welche eine Reinigungswirkung aufweisen, bevorzugt ein oder mehrere Tenside;
- einen festen Indikator, der anzeigt, wann das pH-Puffer-System verbraucht ist,
- ein oder mehrere neutrale Salze

4. Anti-Kratz-Beschichtung nach einem der vorangehenden Ansprüche 1 bis 3, **dadurch gekennzeichnet, dass** die ein oder mehreren Verbindungen mit Reinigungswirkung einen neutralen bis stark alkalischen pH-Wert, bevorzugt neutralen bis schwach alkalischen pH-Wert, aufweisen, vorzugsweise ausgewählt aus Tensiden, insbesondere anionischen, kationischen, nichtionischen oder amphoteren Tensiden, bevorzugt anionischen Tenside, wie Seifen.

5. Anti-Kratz-Beschichtung nach einem der vorangehenden Ansprüche 1 bis 4, **dadurch gekennzeichnet, dass** die ein oder mehreren Verbindungen mit Reinigungswirkung selbst Puffer darstellen.

6. Anti-Kratz-Beschichtung nach Anspruch 3, **dadurch gekennzeichnet, dass**
- das Tensid in der Anti-Kratz-Beschichtung in einer Menge von etwa 0,1 bis etwa 20 Gew.-%, bevorzugt von etwa 0,5 bis etwa 10,0 Gew.-%, ganz besonders bevorzugt 1 bis 5 Gew.-%, vorhanden ist;
- der feste Indikator in einer Menge von max. 1%, bevorzugt <0,1 % und <0,01% enthalten ist;
- ein oder mehrere neutrale Salze in einer Menge von etwa 0,5 bis etwa 5 Gew.-% enthalten sind.

7. Anti-Kratz-Beschichtung nach einem der vorangehenden Ansprüche 1 bis 6, **dadurch gekennzeichnet, dass** das Substrat Glas, Kunststoff oder Metall enthält oder hieraus besteht, vorzugsweise ein Glasrohr ist.

8. Anti-Kratz-Beschichtung nach einem der vorangehenden Ansprüche 1 bis 7, **dadurch gekennzeichnet, dass** das Substrat ausgewählt ist aus einem Borosilikatglas oder Natron-Kalk-Glas, wobei das Borosilikatglas vorzugsweise eine der folgenden Glaszusammensetzungen aufweist:
| | | |
|---|---|---|
| SiO₂ | 50-70 | Gew.-% |
| B₂O₃ | 5-20 | Gew.-% |
| Al₂O₃ | 1-13 | Gew.-% |
| Li₂O | 0-5 | Gew.-% |
| Na₂O | 0-10 | Gew.-% |
| K₂O | 0-10 | Gew.-% |
| Li₂O+Na₂O+K₂O | 3-15 | Gew.-% beträgt, und |
| MgO | 0-5 | Gew.-% |
| CaO | 0-10 | Gew.-% |
| SrO | 0-5 | Gew.-% |
| BaO | 0-15 | Gew.-%, |
| TiO₂ | 0-10 | Gew.-%, |
| bevorzugt | > 0,5-10 | Gew.-% |
| insbesondere | > 0,5 - 5 | Gew.-% beträgt, |
| ZrO₂ | 0-3 | Gew.-% |
| CeO₂ | 0-5 | Gew.-% |
| Fe₂O₃ | 0-1 | Gew.-% |
| WO₃ | 0-3 | Gew.-% |
| Bi₂O₃ | 0-3 | Gew.-% |
| MoO₃ | 0-3 | Gew.-%. |
| ZnO | 0-5 | Gew.% |
| SnO₂ | 0-2 | Gew.% |
sowie Rh, Hf, Ta, W, Re, Os, Ir, Pt, La, Pr, Nd, Sm, Eu, Gd, Tb, Dy, Ho, Er, Tm, Yb, Lu in oxidischer Form in Gehalten von 0-5 Gew.%
und gegebenenfalls Läutermittel in üblichen Konzentrationen, insbesondere ausgewählt aus Chloriden, Sulfaten, As₂O₃ und/oder Sb₂O₃
und das Kalk-Natron-Glas vorzugsweise eine der folgenden Glaszusammensetzungen aufweist:
| | | |
|---|---|---|
| SiO₂ | 50-80 | Gew.-% |
| B₂O₃ | 0-5 | Gew.-% |
| Al₂O₃ | 0-5 | Gew.-% |
| Li₂O | 0-5 | Gew.-% |
| Na₂O | 0-10 | Gew.-% |
| K₂O | 0-10 | Gew.-% |
| Li₂O+Na₂O+K₂O | 3-20 | Gew.-% beträgt, und |
| MgO | 0-5 | Gew.-% |
| CaO | 0-10 | Gew.-% |
| SrO | 0-5 | Gew.-% |
| BaO | 0-15 | Gew.-%, |
| MgO+CaO+SrO+BaO | 3-20 | Gew.-% |
| TiO₂ | 0-10 | Gew.-%, |
| bevorzugt | > 0,5-10 | Gew.-% |
| insbesondere | > 0,5 - 5 | Gew.-% beträgt, |
| ZrO₂ | 0-3 | Gew.-% |
| CeO₂ | 0-5 | Gew.-% |
| Fe₂O₃ | 0 - 1 | Gew.-% |
| WO₃ | 0-3 | Gew.-% |
| Bi₂O₃ | 0-3 | Gew.-% |
| MoO₃ | 0-3 | Gew.-%. |
| ZnO | 0-5 | Gew.% |
| SnO₂ | 0-2 | Gew.% |
sowie Rh, Hf, Ta, W, Re, Os, Ir, Pt, La, Pr, Nd, Sm, Eu, Gd, Tb, Dy, Ho, Er, Tm, Yb, Lu in oxidischer Form in Gehalten von 0-5 Gew.%.

9. Anti-Kratz-Beschichtung nach einem der vorangehenden Ansprüche 1 bis 8, **dadurch gekennzeichnet, dass** die Anti-Kratz-Beschichtung eine temporäre oder permanente Beschichtung darstellt.

10. Anti-Kratz-Beschichtung nach einem der vorangehenden Ansprüche 1 bis 9, **dadurch gekennzeichnet, dass** die Anti-Kratz-Beschichtung wasserlöslich, teilweise wasserlöslich oder wasserunlöslich ist.

11. Anti-Kratz-Beschichtung nach einem der vorangehenden Ansprüche 1 bis 10, **dadurch gekennzeichnet, dass** in der Anti-Kratz-Beschichtung nur die Zusätze, ausgewählt aus dem Puffer-System, neutralen Salzen, Indikatoren und Reinigungszusätzen wasserlöslich sind.

12. Verfahren zur Herstellung einer Anti-Kratz-Beschichtung nach einem der vorangehenden Ansprüche 1 bis 11 mit den Schritten:
- Aufsprühen einer wässerigen Mischung, umfassend zumindest ein Anti-Kratz-Mittel, ein pH-Puffersystem sowie optional weitere Zusätze ausgewählt aus Reinigungszusätzen, Indikatoren und neutralen Salzen in Wasser, auf ein Substrat mittels eines Zerstäubers und
- Trocknen der Mischung unter Erhalt einer Anti-Kratz-Beschichtung.

13. Verwendung einer Anti-Kratz-Beschichtung nach einem der Ansprüche 1 bis 11 zur Reinigung eines Substrats, umfassend
- Aufbringen einer Anti-Kratz-Beschichtung auf ein Substrat,
- Unterziehen des Substrats, auf dem eine Anti-Kratz-Beschichtung aufgebracht ist, einem Waschverfahren, das aufweist
- Legen des Substrats in Wasser unter Herauslösen von Zusätzen aus der Anti-Kratz-Beschichtung oder Auflösen der Anti-Kratz-Beschichtung in Wasser, wobei sich ein pH-Wert im Bereich von 7 bis 12, bevorzugt im Bereich von 7 bis 9, insbesondere bevorzugt im Bereich von 7 bis 8 einstellt und
- Herausnehmen des Substrats,
- wobei die bevorzugte Waschzeit etwa 10 bis etwa 120 min beträgt.

14. Verwendung nach Anspruch 13, **dadurch gekennzeichnet,** das die Waschtemperatur im Bereich von über etwa 0°C bis etwa 90°C, bevorzugt etwa 20°C bis < 80°C, bevorzugter etwa 20°C bis < 70°C, besonders bevorzugt von etwa 25°C bis < 50°C eingestellt wird.

15. Verwendung nach einem der vorangehenden Ansprüche 13 oder 14, **dadurch gekennzeichnet, dass** als Substrat Halbzeug eingesetzt wird, insbesondere als Substrat ein Gegenstand, enthaltend oder bestehend aus Glas, Kunststoff oder Metall, eingesetzt wird, ganz besonders bevorzugt als Substrat ein Glasrohr eingesetzt wird.

16. Verwendung nach einem der vorangehenden Ansprüche 13 bis 15, **dadurch gekennzeichnet, dass** das Substrat ausgewählt wird aus einem Borosilikatglas oder Natron-Kalk-Glas, wobei das Borosilikatglas vorzugsweise eine der folgenden Glaszusammensetzungen aufweist:
| | | |
|---|---|---|
| SiO₂ | 50-70 | Gew.-% |
| B₂O₃ | 5-20 | Gew.-% |
| Al₂O₃ | 1-13 | Gew.-% |
| Li₂O | 0-5 | Gew.-% |
| Na₂O | 0-10 | Gew.-% |
| K₂O | 0-10 | Gew.-% |
| Li₂O+Na₂O+K₂O | 3-15 | Gew.-% beträgt, und |
| MgO | 0-5 | Gew.-% |
| CaO | 0-10 | Gew.-% |
| SrO | 0-5 | Gew.-% |
| BaO | 0-15 | Gew.-%, |
| TiO₂ | 0-10 | Gew.-%, |
| bevorzugt | > 0,5-10 | Gew.-% |
| insbesondere | > 0,5 - 5 | Gew.-% beträgt, |
| ZrO₂ | 0-3 | Gew.-% |
| CeO₂ | 0-5 | Gew.-% |
| Fe₂O₃ | 0-1 | Gew.-% |
| WO₃ | 0-3 | Gew.-% |
| Bi₂O₃ | 0-3 | Gew.-% |
| MoO₃ | 0-3 | Gew.-%. |
| ZnO | 0-5 | Gew.% |
| SnO₂ | 0-2 | Gew.% |
sowie Rh, Hf, Ta, W, Re, Os, Ir, Pt, La, Pr, Nd, Sm, Eu, Gd, Tb, Dy, Ho, Er, Tm, Yb, Lu in oxidischer Form in Gehalten von 0-5 Gew.%
und gegebenenfalls Läutermittel in üblichen Konzentrationen, insbesondere ausgewählt aus Chloriden, Sulfaten, As₂O₃ und/oder Sb₂O₃;
und das Kalk-Natron-Glas vorzugsweise eine der folgenden Glaszusammensetzungen aufweist:
| | | |
|---|---|---|
| SiO₂ | 50-80 | Gew.-% |
| B₂O₃ | 0-5 | Gew.-% |
| Al₂O₃ | 0-5 | Gew.-% |
| Li₂O | 0-5 | Gew.-% |
| Na₂O | 0-10 | Gew.-% |
| K₂O | 0-10 | Gew.-% |
| Li₂O+Na₂O+K₂O | 3-20 | Gew.-% beträgt, und |
| MgO | 0-5 | Gew.-% |
| Ca0 | 0-10 | Gew.-% |
| SrO | 0-5 | Gew.-% |
| BaO | 0-15 | Gew.-%, |
| MgO+CaO+SrO+BaO | 3-20 | |
| TiO₂ | 0-10 | Gew.-%, |
| bevorzugt | > 0,5-10 | Gew.-% |
| insbesondere | > 0,5 - 5 | Gew.-% beträgt, |
| ZrO₂ | 0-3 | Gew.-% |
| CeO₂ | 0-5 | Gew.-% |
| Fe₂O₃ | 0-1 1 | Gew.-% |
| WO₃ | 0-3 | Gew.-% |
| Bi₂O₃ | 0-3 | Gew.-% |
| MoO₃ | 0-3 | Gew.-%. |
| ZnO | 0-5 | Gew.% |
| SnO₂ | 0-2 | Gew.% |
sowie Rh, Hf, Ta, W, Re, Os, Ir, Pt, La, Pr, Nd, Sm, Eu, Gd, Tb, Dy, Ho, Er, Tm, Yb, Lu in oxidischer Form in Gehalten von 0-5 Gew.%.
